# EUROPEAN PATENT SPECIFICATION

(11) **EP 4 155 859 B1**
(45) Date of publication and mention of the grant of the patent: **24.07.2024**
(21) Application number: 22177239.5
(22) Date of filing: 03.06.2022
(51) Int. Cl.: G05D 1/00, A01D 34/00

(54) **IMPROVED NAVIGATION FOR A ROBOTIC WORK TOOL**
VERBESSERTE NAVIGATION FÜR EIN ROBOTISCHES ARBEITSWERKZEUG
NAVIGATION AMÉLIORÉE POUR UNE MACHINE DE TRAVAIL ROBOTISÉE

(30) Priority: 23.09.2021 SE 2151166
(43) Date of publication of application: 29.03.2023
(73) Proprietor: Husqvarna AB, 561 82 Huskvarna (SE)
(72) Inventor: HOLGERSSON, Jonas, 561 40 HUSKVARNA (SE)

(56) References cited:
- EP-A1- 3 698 620
- US-A1- 2018 353 040

## Description

### TECHNICAL FIELD

This application relates to a robotic work tool and in particular to a system and a method for providing an improved navigation for robotic work tools, such as lawnmowers, in such a system.

### BACKGROUND

Automated or robotic work tools such as robotic lawnmowers are becoming increasingly more popular and there is an increasing demand for utilizing more than one robotic work tool in an operational area.

However, there are problems as regards providing charging platforms for multiple robotic work tools in a same operational area.

For example in some solutions for multiple robotic work tools in one operational area, the robotic work tools and their charging stations are using separate control signals (period times) but sharing the same boundary wire where the control signals are being sent. This creates a quite complex disturbance, noise and interference situation for the control signal receiver in the robotic work tools. For example, if three mowers are working in the same operation area, their three charging stations are connected to the same boundary wire. The three charging stations are sending their own A-pulses with different period times. The three A-pulse trains will quite often collide causing missed signals or other more complex problems, causing the robotic work tool software to loose synchronisation with its control signal, or even worse, go outside the boundary wire.

Since typical multi-robotic work tool are installations are large with long distances to the boundary wire, the circumstances for the control receiver in the robotic work tool is already complicated, even without the additional signals from other robotic work tools' charging stations. Also, the electrical interconnection between the charging station electronics causes the transmitted signals from them to be weaker than if only one charging station is connected to the boundary wire.

The charging station connections and/or base platforms create an extra load for each other, on top of the load caused by the length of boundary loop wire.

The patent application published as US20180353040A1 discloses a ground working system has at least one self-driving ground working device, wherein the operating region of the ground working device is determined by an edge boundary. The ground working device travels automatically within the operating region along a traveling path, wherein the ground working device has a drive, a control unit and an in-device battery for supplying energy to the ground working device. A charging station for charging the battery of the ground working device is also provided. The charging station is set up on the edge boundary without interrupting the edge boundary. The ground working device goes to the charging station for charging the battery as required.

The patent application published as EP3698620A1 discloses a utility system comprising a boundary wire loop arranged to carry an electric current and generate a first magnetic field, wherein the boundary wire loop defines a working area; a utility vehicle configured to move within the working area and to detect magnetic fields to assist its navigation; and a charging system. The charging system comprises a charging station for receiving and charging the utility vehicle ; and a charging station wire loop arranged to carry an electric current and generate a second magnetic field, wherein a portion of the charging station wire loop is disposed adjacent a portion of the boundary wire loop such that when current flows in both wire loops the respective magnetic fields from the adjacent portions are substantially cancelled. The charging system is configured so that electric current is provided to the charging station wire loop to generate the second magnetic field if the charging station is capable of receiving and charging the utility vehicle.

Thus, there is a need for an improved manner of enabling the operation and charging of multiple robotic work tools in a same operational area.

### SUMMARY

It is therefore an object of the teachings of this application to overcome or at least reduce those problems by providing by providing a robotic work tool arranged to operate in an operational area bounded by a boundary wire, the operational area encompassing a first charging station and a second charging station, each charging station comprising a base station wire, the robotic work tool comprising a controller, wherein the controller is configured to: operate in the operational area according to a first control signal, the first control signal comprising a first boundary signal being transmitted through the boundary wire and a first base station signal being transmitted through the base station wire of the first charging station; navigate the robotic work tool to locate and move the robotic work tool to the first charging station based on the first control signal; navigate the robotic work tool to distance the robotic work tool from the first charging station in a predetermined manner; synchronize to a second control signal comprising a first boundary signal and a second base station signal both being transmitted through the base station wire of the second charging station; and navigate the robotic work tool to enter the second charging station based on the second control signal as per the appended claims.

In some embodiments the robotic work tool is associated with the second charging station, and wherein the controller is further configured to determine that the robotic work tool is associated with the second charging station based on settings.

In some embodiments the robotic work tool further comprises a sensor for deduced reckoning, and wherein the controller is further configured to navigate the robotic work tool to distance the robotic work tool from the first charging station in the predetermined manner based on deduced reckoning.

In some embodiments the controller is further configured to navigate the robotic work tool to distance the robotic work tool from the first charging station in the predetermined manner based on the first control signal.

In some embodiments the controller is further configured to determine that the robotic work tool is unable to synchronize to the second control signal, and in response thereto navigate the robotic work tool to reposition the robotic work tool and reattempt to synchronize to the second control signal.

In some embodiments the controller is further configured to reposition the robotic work tool by navigating the robotic work tool to the first charging station based on the first control signal.

In some embodiments the controller is further configured to reposition the robotic work tool by navigating the robotic work tool to move a distance.

In some embodiments the controller is further configured to reposition the robotic work tool by navigating the robotic work tool in a random pattern searching for the second control signal.

In some embodiments the controller is further configured to navigate the robotic work tool to distance the robotic work tool from the first charging station in the predetermined manner by moving the robotic work tool a predetermined distance from the first charging station.

In some embodiments the predetermined distance is based on a range of the base station field (R).

In some embodiments the predetermined distance is 2, 3, or 5 meters or in the range 1-5, 2-6, 3-7 or 2-10 meters.

In some embodiments the controller is further configured to navigate the robotic work tool to distance the robotic work tool from the first charging station in the predetermined manner by turning and then moving the robotic work tool a predetermined distance in a straight line from the first charging station.

In some embodiments the controller is further configured to navigate the robotic work tool to distance the robotic work tool from the first charging station in the predetermined manner by moving the robotic work tool in a random or semi-random manner.

It is also an object of the teachings of this application to overcome the problems by providing a method for use in a robotic work tool arranged to operate in an operational area bounded by a boundary wire, the operational area encompassing a first charging station and a second charging station, each charging station comprising a base station wire, the method comprising: operating in the operational area according to a first control signal, the first control signal comprising a first boundary signal being transmitted through the boundary wire and a first base station signal being transmitted through the base station wire of the first charging station; navigating the robotic work tool to locate and move the robotic work tool to the first charging station based on the first control signal; navigating the robotic work tool to distance the robotic work tool from the first charging station in a predetermined manner; synchronizing to a second control signal comprising a first boundary signal and a second base station signal both being transmitted through the base station wire of the second charging station; and navigating the robotic work tool to enter the second charging station based on the second control signal as per the appended claims.

It is also an object of the teachings of this application to overcome the problems by providing a robotic work tool system comprising a first robotic work tool associated with a first charging station and one or more second robotic work tools each associated with a second charging station, wherein at least one of the one or more second robotic work tools is a robotic work tool according to herein.

In some embodiments the robotic work tool is a robotic lawnmower.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to some embodiments of the teachings herein;
Figure 1B shows a schematic view of the components of an example of a robotic work tool being a robotic lawnmower according to some example embodiments of the teachings herein;
Figure 2A shows a schematic view of a robotic work tool system according to some example embodiments of the teachings herein;
Figure 2B shows a schematic view of a robotic work tool system according to some example embodiments of the teachings herein;
Figure 2C shows a schematic view of a robotic work tool system according to some example embodiments of the teachings herein;
Figure 2D shows a schematic view of a robotic work tool system according to some example embodiments of the teachings herein;
Figure 2E shows a schematic view of a robotic work tool system according to some example embodiments of the teachings herein;
Figure 2F shows a schematic view of a robotic work tool system according to some example embodiments of the teachings herein; and
Figure 3 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic watering, robotic farming equipment, or other robotic work tools.

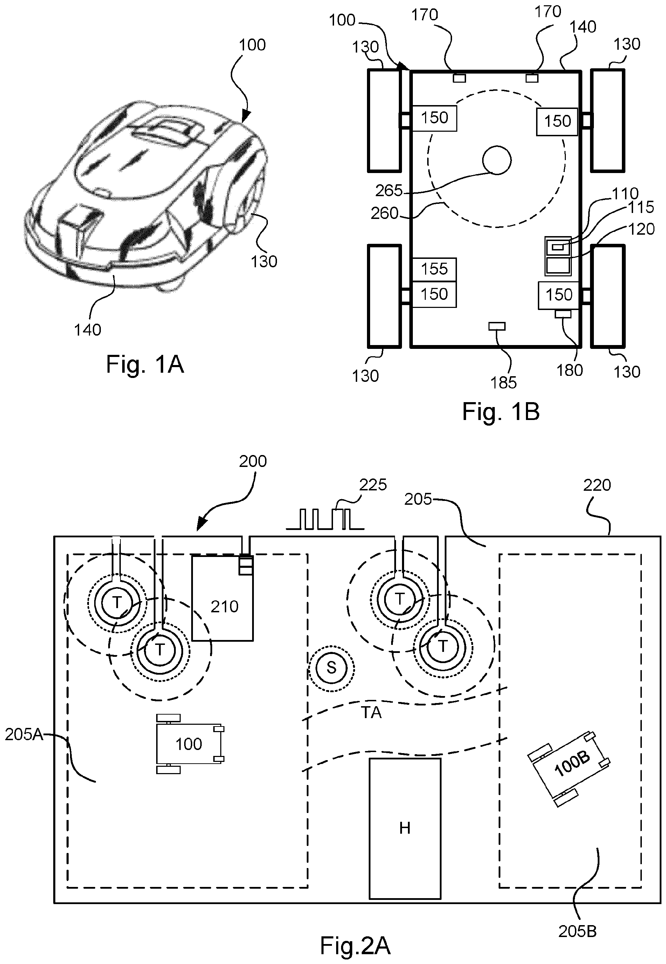

Figure 1A shows a perspective view of a robotic work tool 100, here exemplified by a robotic lawnmower 100, having a body 140 and a plurality of wheels 130 (only one side is shown). The robotic work tool 100 may be a multi-chassis type or a mono-chassis type (as in figure 1A). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golfball collectors, and robotic mulchers to mention a few examples.

It should also be noted that the robotic work tool is a self-propelled robotic work tool, capable of autonomous navigation within a work area, where the robotic work tool propels itself across or around the work area in a pattern (random or predetermined).

Figure 1B shows a schematic overview of the robotic work tool 100, also exemplified here by a robotic lawnmower 100. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 150, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed under figure 1A,

The controller 110 may be implemented using any suitable, available processor or Programmable Logic Circuit (PLC). The memory 120 may be implemented using any commonly known technology for computer-readable memories such as ROM, FLASH, DDR, or some other memory technology.

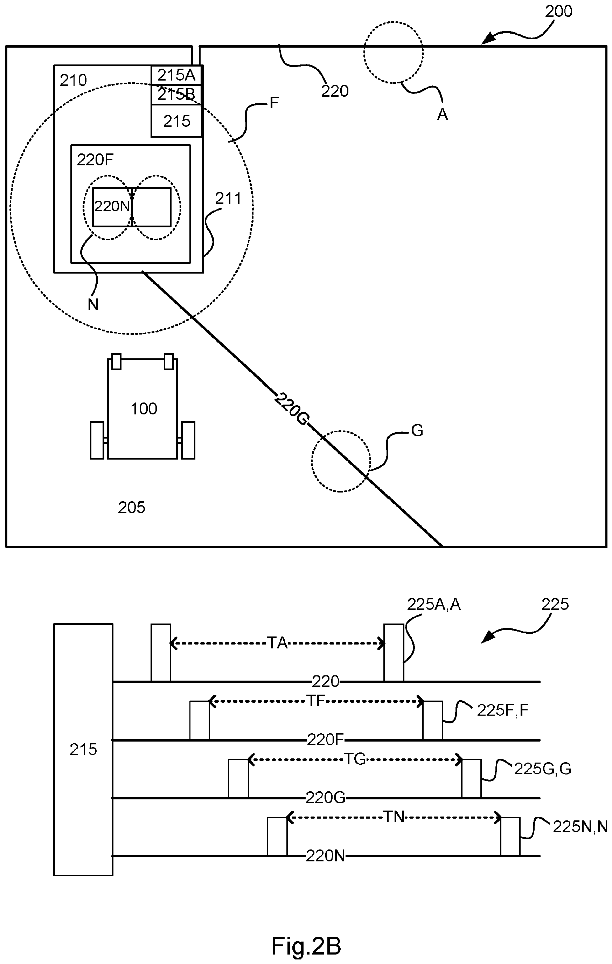

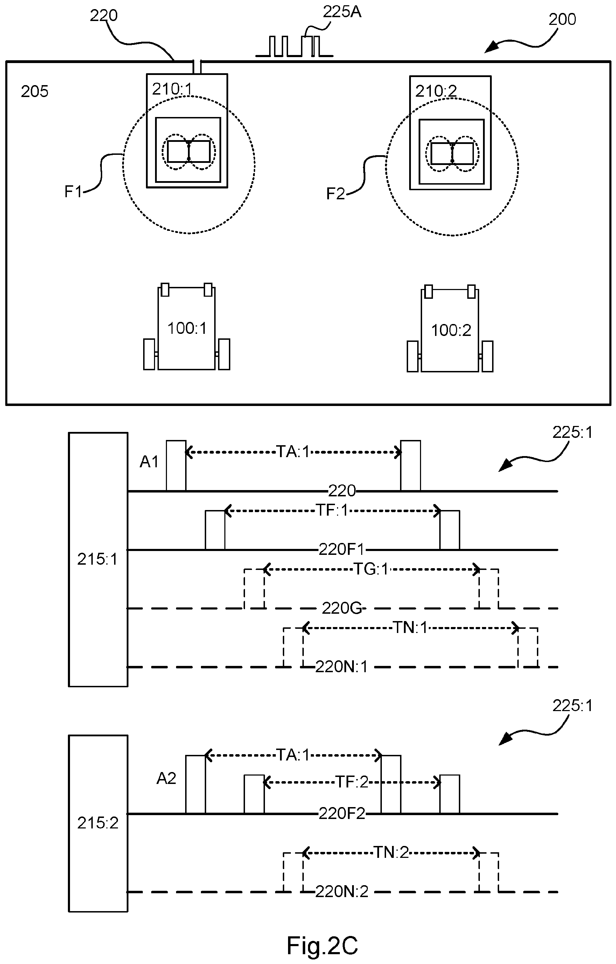

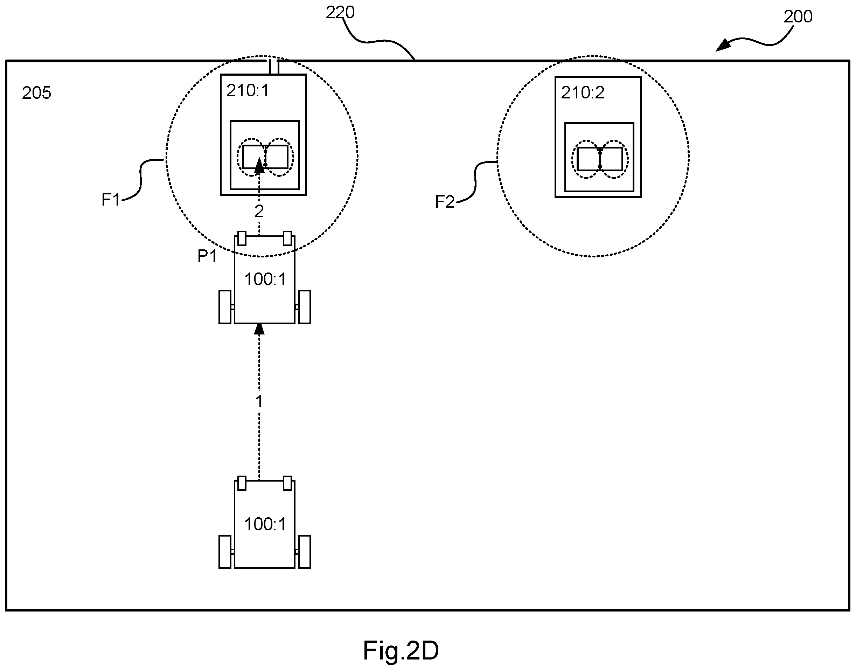

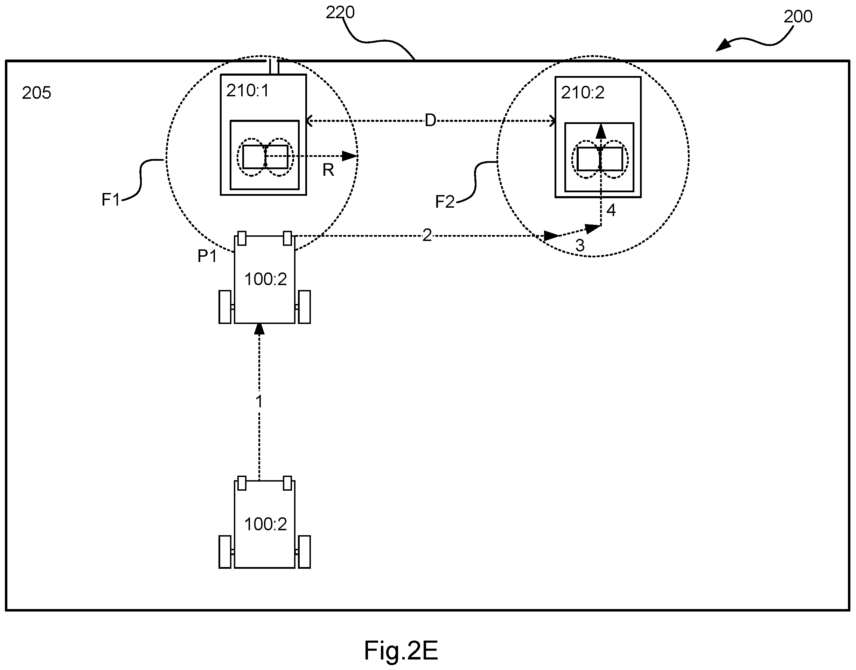

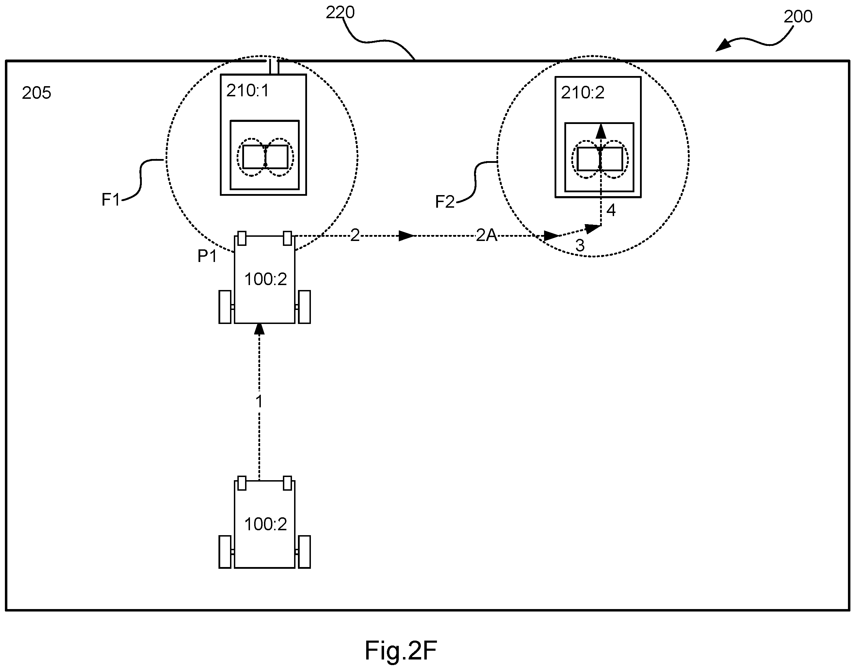

The robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment 200 as discussed in relation to figure 2 below for providing information regarding status, location, and progress of operation to the user equipment 200 as well as receiving commands or settings from the user equipment 200. Alternatively or additionally, the robotic lawnmower 100 may be arranged to communicate with a server (referenced 240 in figure 2A) for providing information regarding status, location, and progress of operation as well as receiving commands or settings.

The robotic lawnmower 100 also comprises a grass cutting device 160, such as a rotating blade 160 driven by a cutter motor 165. The grass cutting device being an example of a work tool 160 for a robotic work tool 100.

For enabling the robotic lawnmower 100 to navigate with reference to a wire, such as a boundary wire, emitting a magnetic field caused by a control signal transmitted through the wire, the robotic lawnmower 100 is further configured to have at least one magnetic field sensor 170 arranged to detect the magnetic field and for detecting the wire (and/or for receiving and possibly also sending information to/from a signal generator). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the wire. This enables the controller 110 to determine whether the robotic lawnmower 100 is close to or crossing the wire. This also enables the controller 110 to determine if the robotic work tool 100 is inside or outside an area enclosed by the wire. Furthermore, by utilizing two or more sensors 170, the robotic work tool is enabled to follow the wire, both over it and at a distance to it. This will be discussed in further details with reference to figure 2B.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The robotic lawnmower 100 may further comprise at least one navigation sensor, such as a beacon navigation sensor and/or a satellite navigation sensor 185. The beacon navigation sensor may be a Radio Frequency receiver, such as an Ultra Wide Band (UWB) receiver or sensor, configured to receive signals from a Radio Frequency beacon, such as a UWB beacon. The satellite navigation sensor may be a GPS (Global Positioning System) device (or other Global Navigation Satellite System (GNSS) device) or a RTK device.

As mentioned above, in some embodiments, the robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the operational area 205. In some embodiments, the map application includes one or more start regions and one or more goal regions for each work area. In some embodiments, the map application also includes one or more transport areas.

Figure 2A shows a robotic work tool system 200 in some embodiments. The schematic view is not to scale. The robotic work tool system 200 comprises two or more robotic work tools 100 according to the teachings herein. It should be noted that the operational area 205 shown in figure 2A is simplified for illustrative purposes. The robotic work tool system comprises a boundary 220 that may be virtual and/or electro mechanical such as a magnetic field generated by a control signal 225 being transmitted through a boundary wire, and which magnetic field is sensed by sensor in the robotic work tool 100.

The robotic work tool system 200 further comprises two or more charging stations 210. The robotic work tool system may comprise a charging station by the charging station being connected directly to the system, or indirectly by the charging statin being placed in the operational area and cooperating with any, some or all of the components of the robotic work tool system 200, specifically one or more of the robotic work tools100.

In some embodiments, each charging station 210 comprises a signal generator 215 configured to generate one or more control signals 225 to be transmitted through one or more wire, such as a boundary wire 220, a guide wire, a station guiding field wire (so-called F-field) and/or a docking field wire (so-called N-field). More details on the use of the signal generator, the control signal(s) and the various wires will be discussed in relation to figure 2B.

As with figures 1A and 1B, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

The one or more robotic working tools 100 of the robotic work tool system 200 are arranged to operate in an operational area 205, which in this example comprises a first work area 205A and a second work area 205B connected by a transport area TA. However, it should be noted that an operational area may comprise a single work area or one or more work areas, possibly arranged adjacent for easy transition between the work areas, or connected by one or more transport paths or areas, also referred to as corridors. In the following work areas and operational areas will be referred to interchangeably, unless specifically indicated.

The operational area 205 is in this application exemplified as a garden, but can also be other operational areas as would be understood, such as an airfield. As discussed above, the garden may contain a number of obstacles, for example a number of trees, stones, slopes and houses or other structures.

In some embodiments the robotic work tool is arranged or configured to traverse and operate in operational areas or work areas that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The operational area 205 exemplified with referenced to figure 2A, may thus be such a non-uniform work area as disclosed in this paragraph that the robotic work tool is arranged to traverse and/or operate in.

As shown in figure 2A, the robotic working tools 100 and 100B are arranged to navigate in one or more work areas 205A, 205B, possibly connected by a transport area TA. It should be noted that even if the two robotic work tools 100, 100B are shown as working in separate work areas 205A, 205B, this is only one example, and as a skilled person would understand, the two robotic work tools 100, 100B may equally well be working in a same work area, being the general work area of the operational are 205 or either of the two (or more) work areas 205A, 205B.

In the below several embodiments of how the robotic work tool may be adapted will be disclosed. It should be noted that all embodiments may be combined in any combination providing a combined adaptation of the robotic work tool.

Figure 2B shows a simplified, schematic view of the robotic work tool system 200 as disclosed in relation to figure 2A. In Figure 2B components of the signal generator 215 of the charging station 210 is shown. The signal generator comprises a memory 215B for storing instructions for the overall control of the signal generator and for signal forms to be used and a controller 215A configured to generate a control signal according to the instructions. The signal generator also comprises an amplifier, assumed to be part of the controller for the purpose of the teachings herein. The signal generator is thus configured to generate and transmit a control signal 225. As will be discussed in the below a control signal can be seen as comprising a plurality of partial control signals or be a composite of several signals being transmitted through the same or through different wires, each (partial) control signal generating a corresponding magnetic field around the wire the signal is being transmitted through. The magnetic fields are indicated as dotted lines in figure 2B

The signal generator 215 of figure 2B is connected to a boundary wire 220 for transmitting a boundary signal A for keeping the robotic work tool inside the operational area and a so-called F-field wire 220F transmitting a so-called F-signal F for enabling the robotic work tool to find the charging station 210. The F-signal and the F-wire will hereafter also be referred o as a base station signal and a base station wire respectively. As is indicated in figure 2B, the F-wire 220F is arranged in a base plate 211 of the charging station 210, thus forming a small loop. The F-wire 225F is arranged fully within the charging station 210 and mostly within the base plate 211 and does not extend beyond or outside the charging station. In some embodiments the F-wire 225F is arranged primarily (mostly) in the base plate 211, except for connections to the signal generator, The resulting magnetic field, the F-field is comparatively strong inside the loop, but the signal strength falls of rather rapidly outside the loop, resulting in a radius of the F-field of a few meters, for example 2, 3, or 5 meters.

In some embodiments, the signal generator 215 is also connected to a docking wire 220N for transmitting a signal generating a magnetic field N for enabling the robotic work tool to be guided during the docking in the charging station. As is known in the field, other alternatives exist for facilitating docking in the charging station, such as use of guide wires, or the boundary wire running through the charging station.

Optionally, in some embodiments, the signal generator 215 is also connected to a guide wire 220G for transmitting a guide signal generating a magnetic guide field G for enabling the robotic work tool to be guided to a specific position in the operational area.

The lower half of figure 2B shows how the signal generator 215 is configured to transmit one control signal through each of the wires. In this example, the control signal(s) is a pulsed signal where a pulse train (possibly a single pulse) is transmitted at a period T through each corresponding wire. In the example of figure 2B all signals have the same period (TA=TF=TG=TN).

It should be noted that the exact type of control signals being used may be different in different embodiments and that many alternatives exist [EXAMPLES].

To be noted is that one (partial) control signal is transmitted through the boundary wire 220 and one (partial) control signal is transmitted through the F-wire 220F.

Such signal generator arrangements are commonly known in the field and will not be discussed in further detail herein, except as pertains to the invention.

Figure 2C shows a simplified view of a robotic work tool system 200 as in figure 2A and Figure 2B. Figure 2C shows the robotic work tool system 200 comprising two robotic work tools 100:1, 100:2 each associated with a respective charging station 210:1, 210:2. Each charging station 210:1, 210:2 comprises a respective signal generator 215:1, 215:2. Each signal generator 215: 1, 215:2 is configured to generate an F field F1, F2 respectively.

Notably the first signal generator 215:1 is also connected to the boundary wire 220 for generating and transmitting a boundary control signal 225A, whereas the second signal generator 215:2 need not be connected to the boundary wire. The second signal generator 215:2 is however also configured to generate and transmit a boundary control signal, but not through the boundary wire 220.

As indicated in the lower half of figure 2C, the first signal generator 215:1 generates and transmit various signals through various wires, as discussed in regards to figure 2B. However, the and second signal generator 215:2 generates and transmits a boundary control signal A and an F-field signal F through the same wire, namely the F-wire 220F:2 connected to the second signal generator 215:2.

In some embodiments, the second signal generator also generates and transmits an N-signal through the N-wire 220N for facilitating docking.

As is also shown in figure 2C the first and second control signals A: 1 and A:2 are different as is indicated by the difference in (time) periods for the two signals (TA:1 =/= TA:2). The two control signals can thus be differentiated from one another.

The first robotic work tool 100:1 is configured to operate during operation in the operational area 205 according to the control signal 225:1 of the first signal generator 215:1.

Contrary to prior art systems having different signal generators generating and transmitting different control signals, the second robotic work tool 100:2 is also configured to operate during operation in the operational area 205 according to the control signal 225:1 of the first signal generator 215:1.

During operation both the first robotic work tool 100:1 and the second robotic work tool 100:2 thus operate according to the control signal 225:1 of the first signal generator 215:1.

Figure 2D shows a simplified view of a robotic work tool system 200 as in Figure 2A, Figure 2B and Figure 2C. Figure 2D shows a charging procedure for the first robotic work tool 100:1. The first robotic work tool 100:1 locates the first charging station 210:1. There exist many possibilities of how to locate the charging station, and the description herein will focus on what happens as the robotic work tool 100 has located the first charging station 210.

As the charging station has been located, the robotic work tool 100:1 moves to a first position P1 close to the charging station, such as in front of the charging station. This is indicated by the arrow marked "1" in figure 2D. In some embodiments the first point is a point where docking is to be commenced, i.e. a docking point. In embodiments utilizing both an N-field and an F-field, such a point is well-defined, as is known.

As the robotic work tool 100:1 is associated with the first charging station, the first robotic work tool 100:1 simply proceeds and docks in the charging station (as indicted by the dotted arrow marked 2) using any known manner of docking, such as by navigating based on the N-field. The robotic work tool 100:1, is in some embodiments configured to determine that it is associated with the first charging station by being programmed to this. In some embodiments the first robotic work tool 100:1 configured to determine that it is associated with the first charging station through settings, wherein a robotic work tool may be indicated to be the first robotic work tool through the settings, during an initialization.

In some embodiments the first robotic work tool 100:1 configured to determine that it is associated with the first charging station through settings received from a server, wherein a robotic work tool may be indicated to be the first robotic work tool through the settings, during an initialization or during a startup.

Figure 2E shows a simplified view of a robotic work tool system 200 as in Figure 2A, Figure 2B, Figure 2C and Figure 2D. Figure 2E shows a charging procedure for the second robotic work tool 100:2. The second robotic work tool 100:2 locates the first charging station 210:1 in much the same manner as the first robotic work tool 100:1 as discussed in relation to figure 2D, and the second robotic work tool also moves to the first position P, as indicted by the dotted arrow marked 1. Here the second robotic work tool determines that it is not associated with the first charging station 215:1.This may be done in a manner similar to how the first robotic work tool determines that it is associated with the first charging station, i.e. through settings for example. The determination may be explicit or implicit and automatic in the robotic work tool's internal instructions.

In any case, the second robotic work tool is configured to distance itself from the first charging station in a predetermined manner, as indicated by the dotted arrow marked 2.

In some embodiments, the second robotic work tool is configured to distance itself, by moving a predetermined distance, indicated D. The second robotic work tool is in some such embodiments configured to do this by turning 90 degrees in a predetermined direction and propel itself the predetermined distance D. In some such embodiments, the predetermined distance D corresponds to the range of the F-filed and is at least twice the range (indicated R in figure 2E). In some such alternative or additional embodiments, the predetermined distance D is 2, 3, or 5 meters. In some such embodiments, the predetermined distance D is in the range 1-5, 2-6, 3-7 or 2-10 meters.

As the second robotic work tool 100:2 has distanced itself, the second robotic work tool attempts to synchronize to the second control signal 225:2. The manner of synchronizing to the control signal depends on the type of control signal being used. In the example of a pulsed signal with a specific time period, the second robotic work tool will start searching for the control signal using or based on the associated time period.

As the second robotic work tool 100:2 synchronizes to the second control signal 225:2, the second robotic work tool 100:2 navigates in the second F-filed F2 as indicated by the dotted arrow marked 3 to be able to dock in the second charging station 210:2 as indicated by the dotted arrow marked 4. There are many alternative as how to navigate based on the F-field and how to dock in the charging station as a skilled person would realize. A key point here is that both the second boundary signal and the second F-signal are transmitted through the F-guide wire 220F:2.

As the second control signal is transmitted through the F-wire it has a limited range, and will thus not cause the signal environment in the operational area 205 to become cluttered with signals, i.e. it will not add (significantly, noticeable or at all) to the interference and noise in the operational area 205.

In some embodiments the second robotic work tool 100:2 stops operating according to the first control signal 225:1 while distancing itself. In such embodiments, the navigation during the distancing may be made utilizing deduced reckoning.

In some embodiments the second robotic work tool 100:2 continues operating according to the first control signal 225:1 while distancing itself. In such embodiments, the navigation during the distancing may be made based on the first control signal, possibly in combination with utilizing deduced reckoning. Deduced reckoning may involve navigating according to odometry, accelerometers or any combination of such measures or other known deduced reckoning measures. As an alternative or a supplement, the navigation may be based on satellite navigation or beacon navigation. In such embodiments, the predetermined manner is thus to navigate using deduced reckoning and/or satellite- (or beacon-) based navigation to distance the robotic work tool, possibly by fooling the boundary wire 220.

As an alternative or a supplement, the navigation may be based on following the boundary wire 220, thereby still being synchronized to the first control signal 225:1, as in following the boundary wire 220 based on the first boundary signal 225A, A.

Figure 2F shows a simplified view of a robotic work tool system 200 as in Figure 2A, Figure 2B, Figure 2C, Figure 2D and Figure 2E. Figure 2F shows a situation where the second robotic work tool 100:2 is not able to synchronize with the second control signal 225:2. In some embodiments, the second robotic work tool is then configured to operate according to the first control signal 225:1 (possibly after resynchronizing to the first control signal 225:1) to reposition itself for a second or further attempt at synchronizing with the second control signal 225:2.

In some embodiments, as shown in in figure 2F, the robotic work tool is configured to reposition itself by distancing itself a further distance, as indicated by the dotted arrow marked 2A. In some such embodiments, the further distance is half the predetermined distance D.

It should be noted that any, some or all of the components of the second control signal 225:2 may be the same as the corresponding component(s) of the first control signal.

In some embodiments, as shown in in figure 2F, the robotic work tool is configured to reposition itself by returning to the first charging station and repeat the attempt at finding the second charging station. In some such embodiments the robotic work tool is further configured to continue operating for a short time period (1, 2, 3, 4 or 5 minutes) and then repeat the attempt to find the second charging station, starting by finding the first charging station again.

In some embodiments, as shown in in figure 2F, the robotic work tool is configured to reposition itself by moving in a more or less random pattern inside a small ara (spanning, 1, 2, or 3) meters. This is similar to how prior art robotic work tools move in order to regain synchronization with a lost control signal. In such an embodiment, the attempt to synchronize may be continues with the repositioning.

As it may take some time to synchronize with the second control signal, and to avoid that the robotic work tool exits the operational area (especially in embodiments where the robotic work tool is not able to simultaneously be synchronized to the first control signal), the robotic work tool is configured to halt or at least slow down when attempting to synchronize.

It should be noted that even though the description herein separates between a first and a second robotic work tool, they may be of the same type and configured for the same operation, possibly based on settings.

It should be noted that even though the description herein is centered around examples of a first and a second robotic work tool, the robotic work tool system may comprise more than one second robotic work tool, each associated with its own charging station.

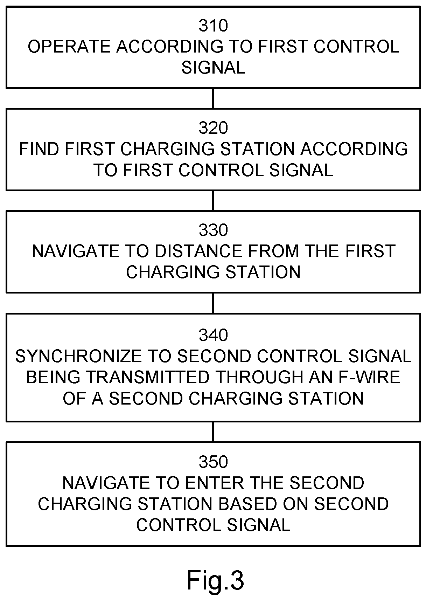

Figure 3 shows a flowchart for a general method according to herein. The method is for use in a robotic work tool as in figures 1A and 1B. The robotic work tool is configured for operating 310 in the operational area 205 according to a first control signal 225:1, the first control signal comprising a first boundary signal 225:1 being transmitted through the boundary wire 220 and a first base station signal F1 being transmitted through the base station wire 220F:1 of the first charging station 210:1. The method further comprises navigating 320 the robotic work tool 100 to locate and move the robotic work tool 100 to the first charging station 210:1 based on the first control signal 225:1. Then the robotic work tool navigates 330 to distance the robotic work tool from the first charging station 210:1 in a predetermined manner and then synchronizes 340 to a second control signal 225:2 comprising a first boundary signal and a second base station signal F2 both being transmitted through the base station wire 220F:2 of the second charging station 210:2. Then, the robotic work tool 100 navigates to enter the second charging station based on the second control signal 225:2.

A robotic work tool may thus in some embodiments be configured to perform the method according to figure 3.

## Claims

1. A robotic work tool system (200) comprising a boundary wire (220), a first charging station (210: 1), a second charging station (210:2), wherein each charging station (210) comprises a base station wire (220F), and
wherein the first charging station (210: 1) comprises a first signal generator (215: 1) arranged to transmit a first control signal (225: 1), the first control signal (225:1) comprising a first boundary signal (A1) being transmitted through the boundary wire (220) and a first base station signal (F1) being transmitted through the base station wire (220F: 1) of the first charging station (210: 1);
wherein the second charging station (210:2) comprises a second signal generator (215:2) arranged to transmit a second control signal (225:2), the second control signal (225:2) comprising a second boundary signal (A2) and a second base station signal (F2) both being transmitted through the base station wire (220F:2) of the second charging station (210:2),
wherein the robotic work tool system (200) further comprises a first robotic work tool (100:1) associated with the first charging station (210:1) and one or more second robotic work tools (100:2) each associated with the second charging station (210:2), wherein the first and second robotic work tools (100) are arranged to operate in an operational area (205) bounded by the boundary wire (220), the operational area (205) encompassing the first charging station (210:1) and the second charging station (210:2),
wherein at least one of the one or more second robotic work tools (100:2) comprises a controller, wherein the controller is configured to:
operate in the operational area (205) according to the first control signal (225: 1),
navigate the robotic work tool (100:2) to locate and move the robotic work tool (100:2) to the first charging station (210: 1) based on the first control signal (225: 1);
determine that the robotic work tool (100:2) is not associated with the first charging station (210:1) and in response thereto
navigate the robotic work tool (100:2) to distance the robotic work tool from the first charging station (210:1) in a predetermined manner by turning and then moving the robotic work tool a predetermined distance in a straight line from the first charging station (210: 1);
synchronize to the second control signal (225:2); and
navigate the robotic work tool (100:2) to enter the second charging station based on the second control signal (225:2).

2. The robotic work tool system (200) according to claim 1, wherein the robotic work tool (100) is associated with the second charging station, and wherein the controller is further configured to determine that the robotic work tool (100) is associated with the second charging station based on settings.

3. The robotic work tool system (200) according to claim 1 or 2, wherein the robotic work tool (100) further comprises a sensor (185) for deduced reckoning, and wherein the controller is further configured to navigate the robotic work tool (100) to distance the robotic work tool from the first charging station (210: 1) in the predetermined manner based on deduced reckoning.

4. The robotic work tool system (200) according to claim 1, 2 or 3, wherein the controller is further configured to navigate the robotic work tool (100) to distance the robotic work tool from the first charging station (210:1) in the predetermined manner based on the first control signal (225: 1).

5. The robotic work tool system (200) according to any preceding claim, wherein the controller is further configured to
determine that the robotic work tool is unable to synchronize to the second control signal (225:2), and in response thereto
navigate the robotic work tool to reposition the robotic work tool and reattempt to synchronize to the second control signal (225:2).

6. The robotic work tool system (200) according to claim 5, wherein the controller is further configured to reposition the robotic work tool (100) by navigating the robotic work tool (100) to the first charging station based on the first control signal (225:1).

7. The robotic work tool system (200) according to claim 5 or 6, wherein the controller is further configured to reposition the robotic work tool (100) by navigating the robotic work tool (100) to move a distance.

8. The robotic work tool system (200) according to claim 5, 6 or 7, wherein the controller is further configured to reposition the robotic work tool (100) by navigating the robotic work tool (100) in a random pattern searching for the second control signal (225:2).

9. The robotic work tool system (200) according to claim 1, wherein the predetermined distance is based on a range of the base station field (R).

10. The robotic work tool system (200) according to claim 1 or 9, wherein the predetermined distance is 2, 3, or 5 meters or in the range 1-5, 2-6, 3-7 or 2-10 meters.

11. The robotic work tool system (200) according to any preceding claim, wherein the robotic work tool is a robotic lawnmower.

12. A method for use in a robotic work tool system (200) comprising a boundary wire (220), a first charging station (210:1), a second charging station (210:2), wherein each charging station (210) comprises a base station wire (220F), and
wherein the first charging station (210:1) comprises a first signal generator (215:1) arranged to transmit a first control signal (225:1), the first control signal (225:1) comprising a first boundary signal (A1) being transmitted through the boundary wire (220) and a first base station signal (F1) being transmitted through the base station wire (220F:1) of the first charging station (210: 1);
wherein the second charging station (210:2) comprises a second signal generator (215:2) arranged to transmit a second control signal (225:2), the second control signal (225:2) comprising a second boundary signal (A2) and a second base station signal (F2) both being transmitted through the base station wire (220F:2) of the second charging station (210:2),
wherein the robotic work tool system (200) further comprises a first robotic work tool (100:1) associated with the first charging station (210:1) and one or more second robotic work tools (100:2) each associated with the second charging station (210:2), wherein the first and second robotic work tools (100) are arranged to operate in an operational area (205) bounded by the boundary wire (220), the operational area (205) encompassing the first charging station (210:1) and the second charging station (210:2),
wherein the method comprises
operating at least one of the one or more second robotic work tools (100:2) in the operational area (205) according to the first control signal (225: 1),
navigating the at least one of the one or more second robotic work tools (100:2) to locate and moving the robotic work tool (100:2) to the first charging station (210:1) based on the first control signal (225: 1);
determining that the robotic work tool (100:2) is not associated with the first charging station (210:1) and in response thereto
navigating the robotic work tool (100:2) to distance the robotic work tool from the first charging station (210:1) in a predetermined manner by turning and then moving the robotic work tool a predetermined distance in a straight line from the first charging station (210: 1);
synchronizing to the second control signal (225:2); and
navigating the robotic work tool (100:2) to enter the second charging station based on the second control signal (225:2).

## Patentansprüche

1. Robotisches Arbeitswerkzeugsystem (200), umfassend einen Begrenzungsdraht (220), eine erste Ladestation (210:1), eine zweite Ladestation (210:2), wobei jede Ladestation (210) einen Basisstationsdraht (220F) umfasst, und
wobei die erste Ladestation (210:1) einen ersten Signalgenerator (215:1) umfasst, der eingerichtet ist, um ein erstes Steuersignal (225:1) zu übertragen, das erste Steuersignal (225:1) umfassend ein erstes Begrenzungssignal (A1), das über den Begrenzungsdraht (220) übertragen wird, und ein erstes Basisstationssignal (F1), das über den Basisstationsdraht (220F:1) der ersten Ladestation (210:1) übertragen wird;
wobei die zweite Ladestation (210:2) einen zweiten Signalgenerator (215:2) umfasst, der eingerichtet ist, um ein zweites Steuersignal (225:2) zu übertragen, das zweite Steuersignal (225:2) umfassend ein zweites Begrenzungssignal (A2) und ein zweites Basisstationssignal (F2), die beide über die Basisstationsleitung (220F:2) der zweiten Ladestation (210:2) übertragen werden,
wobei das robotische Arbeitswerkzeugsystem (200) ferner ein erstes robotisches Arbeitswerkzeug (100:1), das der ersten Ladestation (210:1) zugeordnet ist, und ein oder mehrere zweite robotische Arbeitswerkzeuge (100:2) umfasst, die jeweils der zweiten Ladestation (210:2) zugeordnet sind, wobei das erste und das zweite robotische Arbeitswerkzeug (100) eingerichtet sind, um in einem Betriebsbereich (205) betrieben zu werden, der durch den Begrenzungsdraht (220) begrenzt ist, wobei der Betriebsbereich (205) die erste Ladestation (210:1) und die zweite Ladestation (210:2) einschließt,
wobei mindestens eines der einen oder der mehreren zweiten robotischen Arbeitswerkzeuge (100:2) eine Steuerung umfasst, wobei die Steuerung konfiguriert ist zum:
Betreiben in dem Betriebsbereich (205) entsprechend dem ersten Steuersignal (225:1),
Navigieren des robotischen Arbeitswerkzeugs (100:2), um das robotische Arbeitswerkzeug (100:2) basierend auf dem ersten Steuersignal (225:1) zu lokalisieren und zu der ersten Ladestation (210:1) zu bewegen;
Bestimmen, dass das robotische Arbeitswerkzeug (100:2) nicht der ersten Ladestation (210:1) zugeordnet ist, und als Reaktion darauf
Navigieren des robotischen Arbeitswerkzeugs (100:2), um das robotische Arbeitswerkzeug von der ersten Ladestation (210:1) in einer zuvor bestimmten Weise, durch ein Drehen und dann Bewegen des robotischen Arbeitswerkzeugs, eine zuvor bestimmte Entfernung in einer geraden Linie von der ersten Ladestation (210:1) wegzubewegen;
Synchronisieren mit dem zweiten Steuersignal (225:2); und
Navigieren des robotischen Arbeitswerkzeugs (100:2), um in die zweite Ladestation einzutreten, basierend auf dem zweiten Steuersignal (225:2).

2. Robotisches Arbeitswerkzeugsystem (200) nach Anspruch 1, wobei das robotische Arbeitswerkzeug (100) der zweiten Ladestation zugeordnet ist, und wobei die Steuerung ferner konfiguriert ist, um basierend auf Einstellungen zu bestimmen, dass das robotische Arbeitswerkzeug (100) der zweiten Ladestation zugeordnet ist.

3. Robotisches Arbeitswerkzeugsystem (200) nach Anspruch 1 oder 2, wobei das robotische Arbeitswerkzeug (100) ferner einen Sensor (185) für ein abgeleitetes Berechnen umfasst, und wobei die Steuerung ferner konfiguriert ist, um das robotische Arbeitswerkzeug (100) basierend auf dem abgeleiteten Berechnen in der zuvor bestimmten Weise zu navigieren, um das robotische Arbeitswerkzeug von der ersten Ladestation (210:1) zu entfernen.

4. Robotisches Arbeitswerkzeugsystem (200) nach Anspruch 1, 2 oder 3, wobei die Steuerung ferner konfiguriert ist, um das robotische Arbeitswerkzeug (100) zu navigieren, um das robotische Arbeitswerkzeug basierend auf dem ersten Steuersignal (225:1) in der zuvor bestimmten Weise von der ersten Ladestation (210:1) zu entfernen.

5. Robotisches Arbeitswerkzeugsystem (200) nach einem der vorstehenden Ansprüche, wobei die Steuerung ferner konfiguriert ist zum
Bestimmen, dass das robotische Arbeitswerkzeug nicht in der Lage ist, sich mit dem zweiten Steuersignal zu synchronisieren (225:2), und als Reaktion darauf
Navigieren des robotischen Arbeitswerkzeugs, um das robotische Arbeitswerkzeug neu zu positionieren und erneut zu versuchen, mit dem zweiten Steuersignal (225:2) zu synchronisieren.

6. Robotisches Arbeitswerkzeugsystem (200) nach Anspruch 5, wobei die Steuerung ferner konfiguriert ist, um das robotische Arbeitswerkzeug (100) neu zu positionieren, durch das Navigieren des robotischen Arbeitswerkzeugs (100) zu der ersten Ladestation basierend auf dem ersten Steuersignal (225:1).

7. Robotisches Arbeitswerkzeugsystem (200) nach Anspruch 5 oder 6, wobei die Steuerung ferner konfiguriert ist, um das robotische Arbeitswerkzeug (100) neu zu positionieren, durch das Navigieren des robotischen Arbeitswerkzeugs (100), um sich über eine Entfernung zu bewegen.

8. Robotisches Arbeitswerkzeugsystem (200) nach Anspruch 5, 6 oder 7, wobei die Steuerung ferner konfiguriert ist, um das robotische Arbeitswerkzeug (100) neu zu positionieren, durch das Navigieren des robotischen Arbeitswerkzeugs (100) in einem zufälligen Muster nach dem zweiten Steuersignal (225:2) suchend.

9. Robotisches Arbeitswerkzeugsystem (200) nach Anspruch 1, wobei die zuvor bestimmte Entfernung auf einer Reichweite des Basisstationsfelds (R) basiert.

10. Robotisches Arbeitswerkzeugsystem (200) nach Anspruch 1 oder 9, wobei die vorgegebene Entfernung 2, 3 oder 5 Meter beträgt oder in dem Bereich von 1-5, 2-6, 3-7 oder 2-10 Metern liegt.

11. Robotisches Arbeitswerkzeugsystem (200) nach einem der vorstehenden Ansprüche, wobei das robotische Arbeitswerkzeug ein robotischer Rasenmäher ist.

12. Verfahren zur Verwendung in einem robotischen Arbeitswerkzeugsystem (200), umfassend einen Begrenzungsdraht (220), eine erste Ladestation (210:1), eine zweite Ladestation (210:2), wobei jede Ladestation (210) einen Basisstationsdraht (220F) umfasst, und
wobei die erste Ladestation (210:1) einen ersten Signalgenerator (215:1) umfasst, der eingerichtet ist, um ein erstes Steuersignal (225:1) zu übertragen, das erste Steuersignal (225:1) umfassend ein erstes Begrenzungssignal (A1), das über den Begrenzungsdraht (220) übertragen wird, und ein erstes Basisstationssignal (F1), das über den Basisstationsdraht (220F:1) der ersten Ladestation (210:1) übertragen wird;
wobei die zweite Ladestation (210:2) einen zweiten Signalgenerator (215:2) umfasst, der eingerichtet ist, um ein zweites Steuersignal (225:2) zu übertragen, das zweite Steuersignal (225:2) umfassend ein zweites Begrenzungssignal (A2) und ein zweites Basisstationssignal (F2), die beide über die Basisstationsleitung (220F:2) der zweiten Ladestation (210:2) übertragen werden,
wobei das robotische Arbeitswerkzeugsystem (200) ferner ein erstes robotisches Arbeitswerkzeug (100:1), das der ersten Ladestation (210:1) zugeordnet ist, und ein oder mehrere zweite robotische Arbeitswerkzeuge (100:2) umfasst, die jeweils der zweiten Ladestation (210:2) zugeordnet sind, wobei das erste und das zweite robotische Arbeitswerkzeug (100) eingerichtet sind, um in einem Betriebsbereich (205) betrieben zu werden, der durch den Begrenzungsdraht (220) begrenzt ist, wobei der Betriebsbereich (205) die erste Ladestation (210:1) und die zweite Ladestation (210:2) einschließt,
wobei das Verfahren umfasst
Betreiben des mindestens einen des einen oder der mehreren zweiten robotischen Arbeitswerkzeuge (100:2) in dem Betriebsbereich (205) gemäß dem ersten Steuersignal (225:1),
Navigieren des mindestens einen des einen oder der mehreren zweiten robotischen Arbeitswerkzeuge (100:2), um das robotische Arbeitswerkzeug (100:2) basierend auf dem ersten Steuersignal (225:1) zu lokalisieren und zu er ersten Ladestation (210:1) bewegen;
Bestimmen, dass das robotische Arbeitswerkzeug (100:2) nicht der ersten Ladestation (210:1) zugeordnet ist, und als Reaktion darauf
Navigieren des robotischen Arbeitswerkzeugs (100:2), um das robotische Arbeitswerkzeug von der ersten Ladestation (210:1) in einer zuvor bestimmten Weise, durch ein Drehen und dann Bewegen des robotischen Arbeitswerkzeugs, eine zuvor bestimmte Entfernung in einer geraden Linie von der ersten Ladestation (210:1) wegzubewegen;
Synchronisieren mit dem zweiten Steuersignal (225:2); und
Navigieren des robotischen Arbeitswerkzeugs (100:2), um in die zweite Ladestation einzutreten, basierend auf dem zweiten Steuersignal (225:2).

## Revendications

1. Système d'outil de travail robotisé (200) comprenant un câble de délimitation (220), une première station de charge (210:1), une seconde station de charge (210:2), dans lequel chaque station de charge (210) comprend un câble de station de base (220F), et
dans lequel la première station de charge (210:1) comprend un premier générateur de signal (215:1) conçu pour transmettre un premier signal de commande (225:1), le premier signal de commande (225:1) comprenant un premier signal de délimitation (A1) transmis par le câble de délimitation (220) et un premier signal de station de base (F1) transmis par le câble de station de base (220F:1) de la première station de charge (210:1) ;
dans lequel la seconde station de charge (210:2) comprend un second générateur de signal (215:2) conçu pour transmettre un second signal de commande (225:2), le second signal de commande (225:2) comprenant un second signal de délimitation (A2) et un second signal de station de base (F2) tous deux transmis par le câble de station de base (220F:2) de la seconde station de charge (210:2),
dans lequel le système d'outil de travail robotisé (200) comprend en outre un premier outil de travail robotisé (100:1) associé à la première station de charge (210:1) et un ou plusieurs seconds outils de travail robotisés (100:2) chacun associés à la seconde station de charge (210:2), dans lequel les premier et second outils de travail robotisés (100) sont conçus pour fonctionner dans une zone fonctionnelle (205) délimitée par le câble de délimitation (220), la zone fonctionnelle (205) englobant la première station de charge (210:1) et la seconde station de charge (210:2),
dans lequel au moins l'un parmi le ou les seconds outils de travail robotisés (100:2) comprend un dispositif de commande, dans lequel le dispositif de commande est configuré pour :
fonctionner dans la zone fonctionnelle (205) selon le premier signal de commande (225:1),
diriger l'outil de travail robotisé (100:2) pour situer et déplacer l'outil de travail robotisé (100:2) vers la première station de charge (210:1) en fonction du premier signal de commande (225:1) ;
déterminer que l'outil de travail robotisé (100:2) n'est pas associé à la première station de charge (210:1) et, en réponse à cela
diriger l'outil de travail robotisé (100:2) afin d'éloigner l'outil de travail robotisé de la première station de charge (210:1) d'une manière prédéterminée en tournant puis en déplaçant l'outil de travail robotisé sur une distance prédéterminée en ligne droite de la première station de charge (210:1) ;
se synchroniser avec le second signal de commande (225:2) ; et
diriger l'outil de travail robotisé (100:2) afin de le faire entrer dans la seconde station de charge en fonction du second signal de commande (225:2).

2. Système d'outil de travail robotisé (200) selon la revendication 1, dans lequel l'outil de travail robotisé (100) est associé à la seconde station de charge, et dans lequel le dispositif de commande est en outre configuré pour déterminer que l'outil de travail robotisé (100) est associé à la seconde station de charge en fonction de paramètres.

3. Système d'outil de travail robotisé (200) selon la revendication 1 ou 2, dans lequel l'outil de travail robotisé (100) comprend en outre un capteur (185) pour une estimation déduite, et dans lequel le dispositif de commande est en outre configuré pour diriger l'outil de travail robotisé (100) afin d'éloigner l'outil de travail robotisé de la première station de charge (210:1) de la manière prédéterminée en fonction de l'estimation déduite.

4. Système d'outil de travail robotisé (200) selon la revendication 1, 2 ou 3, dans lequel le dispositif de commande est en outre configuré pour diriger l'outil de travail robotisé (100) afin d'éloigner l'outil de travail robotisé de la première station de charge (210:1) de la manière prédéterminée en fonction du premier signal de commande (225:1).

5. Système d'outil de travail robotisé (200) selon l'une quelconque revendication précédente, dans lequel le dispositif de commande est en outre configuré pour
déterminer que l'outil de travail robotisé est incapable de se synchroniser avec le second signal de commande (225:2), et en réponse à cela
diriger l'outil de travail robotisé afin de repositionner l'outil de travail robotisé et tenter à nouveau de se synchroniser avec le second signal de commande (225:2).

6. Système d'outil de travail robotisé (200) selon la revendication 5, dans lequel le dispositif de commande est en outre configuré pour repositionner l'outil de travail robotisé (100) en dirigeant l'outil de travail robotisé (100) vers la première station de charge en fonction du premier signal de commande (225:1).

7. Système d'outil de travail robotisé (200) selon la revendication 5 ou 6, dans lequel le dispositif de commande est en outre configuré pour repositionner l'outil de travail robotisé (100) en dirigeant l'outil de travail robotisé (100) pour se déplacer sur une distance.

8. Système d'outil de travail robotisé (200) selon la revendication 5, 6 ou 7, dans lequel le dispositif de commande est en outre configuré pour repositionner l'outil de travail robotisé (100) en dirigeant l'outil de travail robotisé (100) selon un modèle aléatoire à la recherche du second signal de commande (225:2).

9. Système d'outil de travail robotisé (200) selon la revendication 1, dans lequel la distance prédéterminée est en fonction d'une portée du champ de station de base (R).

10. Système d'outil de travail robotisé (200) selon la revendication 1 ou 9, dans lequel la distance prédéterminée est de 2, 3 ou 5 mètres ou comprise entre 1 et 5, 2 et 6, 3 et 7 ou 2 et 10 mètres.

11. Système d'outil de travail robotisé (200) selon l'une quelconque revendication précédente, dans lequel l'outil de travail robotisé est une tondeuse à gazon robotisée.

12. Procédé destiné à être utilisé dans un système d'outil de travail robotisé (200) comprenant un câble de délimitation (220), une première station de charge (210:1), une seconde station de charge (210:2), dans lequel chaque station de charge (210) comprend un câble de station de base (220F), et
dans lequel la première station de charge (210:1) comprend un premier générateur de signal (215:1) conçu pour transmettre un premier signal de commande (225:1), le premier signal de commande (225:1) comprenant un premier signal de délimitation (A1) transmis par le câble de délimitation (220) et un premier signal de station de base (F1) transmis par le câble de station de base (220F:1) de la première station de charge (210:1) ;
dans lequel la seconde station de charge (210:2) comprend un second générateur de signal (215:2) conçu pour transmettre un second signal de commande (225:2), le second signal de commande (225:2) comprenant un second signal de délimitation (A2) et un second signal de station de base (F2) tous deux transmis par le câble de station de base (220F:2) de la seconde station de charge (210:2),
dans lequel le système d'outil de travail robotisé (200) comprend en outre un premier outil de travail robotisé (100:1) associé à la première station de charge (210:1) et un ou plusieurs seconds outils de travail robotisés (100:2) chacun associés à la seconde station de charge (210:2), dans lequel les premier et second outils de travail robotisés (100) sont conçus pour fonctionner dans une zone fonctionnelle (205) délimitée par le câble de délimitation (220), la zone fonctionnelle (205) englobant la première station de charge (210:1) et la seconde station de charge (210:2),
dans lequel le procédé comprend
le fonctionnement d'au moins l'un parmi le ou les seconds outils de travail robotisés (100:2) dans la zone fonctionnelle (205) selon le premier signal de commande (225:1),
le fait de diriger au moins l'un parmi le ou les seconds outils de travail robotisés (100:2) pour situer et déplacer l'outil de travail robotisé (100:2) vers la première station de charge (210:1) en fonction du premier signal de commande (225:1) ;
le fait de déterminer que l'outil de travail robotisé (100:2) n'est pas associé à la première station de charge (210:1) et, en réponse à cela
le fait de diriger l'outil de travail robotisé (100:2) afin d'éloigner l'outil de travail robotisé de la première station de charge (210:1) d'une manière prédéterminée en tournant puis en déplaçant l'outil de travail robotisé sur une distance prédéterminée en ligne droite de la première station de charge (210:1) ;
la synchronisation avec le second signal de commande (225:2) ; et
le fait de diriger l'outil de travail robotisé (100:2) afin de le faire entrer dans la seconde station de charge en fonction du second signal de commande (225:2).
